# EUROPEAN PATENT SPECIFICATION

(11) **EP 1 856 423 B1**
(45) Date of publication and mention of the grant of the patent: **26.08.2009**
(21) Application number: 06709967.1
(22) Date of filing: 03.03.2006
(51) Int. Cl.: F16H 3/089

(54) **TRANSMISSION CONFIGURATION**
ÜBERTRAGUNGSKONFIGURATION
CONFIGURATION D'UN SYSTEME DE TRANSMISSION

(30) Priority: 05.03.2005 GB 0504628
(43) Date of publication of application: 21.11.2007
(73) Proprietor: Zeroshift Limited, Knowlhill Milton Keynes MK5 8PB (GB)
(72) Inventor: MARTIN, William Wesley, Woughton on the Green, Milton Keynes MK6 3EP (GB); THOMPSON, Richard John Evan, Langley, Berkshire SL3 8WF (GB)
(74) Representative: Morris, Jonathan Paul
(86) International application number: PCT/GB2006/000743
(87) International publication number: WO 2006/095140

(56) References cited:
- WO-A-20/05024261
- DE-A1- 10 037 401
- FR-A- 2 810 713
- US-A- 3 780 840

## Description

The present invention relates to transmission systems and selector mechanisms used in transmission systems to select a gear train, for example dog-type selector mechanisms.

This application refers to a system and method for the elimination of a failure mode that can occur in transmission systems of the type described in WO 2004/099654, WO 2005/005868, WO 2005/005869, WO 2005/024261 and WO 2005/026570. However, similar problems may occur in other types of transmission systems.

The known systems disclosed in the above-mentioned publications are examples of instantaneous transmission systems. The known transmissions have a plurality of gear trains for transmitting drive between a transmission input shaft and a transmission output shaft. For a first gear train, a first gear wheel is rotatably mounted on one of a transmission input shaft and an output shaft and a second gear wheel is fixed to the other shaft, in mesh with the first gear wheel. A second gear train comprising third and fourth gear wheels is similarly arranged. The transmission also includes at least one gear selector mechanism that is located between the rotatably mounted gear wheels that is arranged to selectively lock them for rotation with the shaft on which they are mounted. When a gear wheel from a gear train is locked for rotation with the shaft, drive is transmitted between the input and output shafts via that gear train.

The arrangement is such that when drive is transmitted between the input and output shafts via one of the gear trains, for example the first gear train, the gear selector mechanism can select the new (second) gear train under power without disengaging the first gear train, by locking the rotatably mounted gear wheel of the second gear train to its shaft. Thus momentarily, drive is transmitted between the input and output shaft via two gear trains. The new gear train then overdrives the first gear train and the selector mechanism disengages the first gear wheel. Drive is then transmitted between the input and output shafts via the new gear train only, thus providing uninterrupted power through a gearshift. The selector mechanism is arranged such that the gearshifts can take place under acceleration or deceleration.

The gear selector mechanisms of the known transmissions have four modes with respect to each adjacent gear train:
Fully engaged in both torque directions (fully in gear);
Disengaged in both torque directions (neutral);
Engaged in the forward torque direction while disengaged in the reverse torque direction;
Disengaged in the forward torque direction while engaged in the reverse torque direction.

The last two of the above four modes enable a discrete ratio gearbox to have the ability to shift up or down ratios instantly under load without torque interruption.

There is an inherent failure mode in any gearbox with more than two gear trains that has both of the last two modes. Thus it is possible in instantaneous transmission systems having at least three gear trains for two gears to be engaged simultaneously with opposing modes under some conditions, which causes the transmission to lock up. One of the most dangerous scenarios is if the direction of torque changes during a shift. If torque has a constant known direction during a shift, the natural sequence of events prevents the above failure mode. During a sudden reversal of the direction of torque immediately prior to, or during a shift, there is potential for the above failure mode to occur.

A transmission system typically includes at least three gear trains, and is likely to include four to six gear trains. A transmission having four gear trains requires two instantaneous gear selector mechanisms. The first gear selector mechanism is arranged to selectively engage the first and second gear trains and the second gear selector mechanism is arranged to selectively engage the third and fourth gear trains. Each gear selector mechanism includes first and second sets of engagement members having opposing ends with fixed opposing directions of torque transfer.
This provides an inherent fail-safe arrangement against the above mentioned failure mode where the shift is from a gear on one side of the hub (selector mechanism) to a gear on the other side of the same hub, for example when the first selector mechanism selects between the first and second gears or when the second selector mechanism selects between the third and fourth gears.

The above failure mode can only occur if a gearshift is from a gear that is engageable by one of the gear selector mechanisms to a gear that is engageable by the other gear selector mechanism, for example when changing between second and third gears in the four speed transmission mentioned above, since this requires movement of both the first and second gear selector mechanisms. The first gear selector mechanism has to move out of engagement with the second gear train and the second gear selector mechanism has to move into engagement with the third gear train. If a torque reversal occurs when the second gear is still engaged by the first selector mechanism and the third gear is engaged by the second selector mechanism, the transmission may lock up.

WO 2005/0058648 describes an electronic control system for measuring the direction of torque in the gearbox and managing some shifts such as a kick-down shift. By measuring the magnitude and direction of torque on all shifts it is possible to prevent gearbox lock up due to conflicting modes being engaged in two gears at once. However, control systems are complex and may introduce new failure modes into the transmission system. Since the control system does not affect the relative positions of the gear trains and the selector mechanisms in the instantaneous transmissions described above, the transmission layout remains inherently prone to the failure modes mentioned above should a problem occur with the control system.

FR2810713 which constitutes the closet prior-art, shows a transmission system including first and second shafts, first, second and third gear trains for transmitting drive between the first and second shaft rotatably mounted on the first shaft and a second gear element fixed for rotation with the second shaft, the second gear train includes a third gear element mounted on the first shaft and a fourth gear element rotatably mounted on the second shaft, and the third gear train includes a fifth gear element mounted on the first shaft and a sixth gear element rotatably mounted on the second shaft; and first second and third instantaneous gear selector devices, the first being arranged to lock the first gear element for rotation with the first shaft, each instantaneous gear selector device is arranged to selectively lock its respective gear elements for rotation with its respective shaft from the operational mode: engage in both torque directions.

DE10037401 discloses a dual clutch transmission system including first and second shafts, and a set of gear trains for communicating drive between the shafts via conventional gear selector mechanisms. There is little loss of power during a shift because of the dual clutch arrangement.

Accordingly the present invention seeks to provide an improved transmission system that mitigates at least some of the aforementioned problems.

According to one aspect of the present invention there is provided a transmission system according to claim 1.

Although the above-mentioned failure mode is known to occur in the type of transmission systems mentioned above, it is envisaged that similar problems may occur in other types of instantaneous transmission systems and therefore the invention is not to be considered as being limited to the type of transmissions or instantaneous gear selector devices described in WO 2004/099654, WO 2005/005868, WO 2005/005869, WO 2005/024261 and WO 2005/026570.

Advantageously the selection of each new gear train is preferably across a single instantaneous gear selector device. This prevents lockup from occurring since selection of new gears across a single gear selector device is inherently safe (see above). For example, the transmission can be arranged such that each gear selection requires the actuation of only one of the gear selector devices for each gear selection. However, it is envisaged that in some embodiments it may be desirable to move another selector device into a neutral position before the new gear train is selected by the operative instantaneous gear selector device.

Advantageously the instantaneous gear selector devices can be mounted alternately on the first and second shafts. For example, for a transmission including five instantaneous gear selector devices, the first, third and fifth gear selector devices can be mounted on the first shaft and the second and fourth gear selector devices can be mounted on the second shaft Advantageously the gear trains and the gear selector devices are arranged alternately. For example, for a transmission including four gear trains ("first to fourth gears") and three instantaneous gear selector devices, the preferred arrangement is first gear, first instantaneous gear selector device, second gear, second instantaneous gear selector device, third gear, third instantaneous selector device and fourth gear, when the positions are considered along the shafts. Thus an instantaneous gear selector device is positioned between every pair of gear trains in the example. In this example, this ensures that the sequence of gear selections across individual hubs (movement of a single instantaneous gear selector device) is unbroken.

Preferably the transmission includes between three and ten gear trains, preferably between three and eight gear trains, and more preferably between three and six gear trains. However, any practicable number of gear trains can be included in the transmission system.

Advantageously the transmission includes 'n' instantaneous gear selector mechanisms, where n = number of gear trains minus one.

Preferably the first gear train is a highest or lowest gear and / or the first gear train is positioned as an outermost gear train, for example, positioned as the outermost gear train along the first and second shafts towards the input or output sides.

Advantageously the transmission system can include a fourth gear train having seventh and eighth gear elements, wherein one of the gear elements is fixed for rotation with one of the first and second shafts and the other gear element is rotatably mounted on the other shaft. Preferably the fourth gear train is the highest or lowest gear and / or is positioned as an outermost gear train on the opposite side of the transmission (along the shafts) from the first gear train. If the transmission includes an odd number of gear trains the seventh gear element is preferably fixed for rotation with the first shaft and the sixth gear element is rotatably mounted on the second shaft. If the transmission includes an even number of gear trains the seventh gear element is preferably rotatably mounted on the first shaft and the eighth gear element is fixed for rotation with the second shaft. Preferably the third gear selector device is arranged to selectively lock the seventh gear element for rotation with the first shaft.

If the transmission includes more than three gear trains, preferably the additional gear trains are similarly arranged to the second gear train and are located between the first and fourth gear trains, with additional instantaneous selector devices located between each pair of gear trains.

Preferably the gear selector devices include an actuator assembly and first and second sets of engagement members that are moveable into and out of engagement with the first and second gear wheels independently of each other, said gear selector device being arranged such that when a driving force is transmitted, one of the first and second sets of engagement members drivingly engages the engaged gear wheel, and the other set of engagement members is then in an unloaded condition, wherein the actuator assembly is arranged to move the unloaded set of engagement members into driving engagement with the unengaged gear wheel to effect a gear change. This is an example of an instantaneous gear selector transmission.

Each gear selector device is preferably arranged such that when a braking force is transmitted the first set of engagement members drivingly engages the engaged gear element, and the second set of engagement members is in an unloaded condition, and when a driving force is transmitted the second set of engagement members drivingly engages the engaged gear element, and the second set of engagement members is then in an unloaded condition.

The gear selector device can be arranged to bias the loaded set of engagement members towards an unengaged gear element without disengaging the loaded set of engagement members from the engaged gear element.

The first and second sets of engagement members can be arranged to rotate, in use, with the shaft on which it is mounted. The first shaft may be an input shaft in one embodiment and an output shaft in another embodiment. The second shaft is the other of the input and output shafts.

An embodiment of the present invention will now be described, by way of example only, with reference to the accompanying drawings in which like references indicate equivalent features, wherein:
Figure 1 is a sectional view of a general arrangement of a transmission system in accordance with the present invention;
Figure 2 is a schematic that illustrates the arrangement of a group of dogs on a side of a gear (teeth not shown for clarity);
Figure 3 is a schematic that illustrates the interaction of a selector mechanism and the dogs on the side of a gear wheel;
Figure 4 is a perspective view of part of a selector mechanism having ridged connectors;
Figure 5 is a perspective view of an engagement bar from the selector mechanism of Figure 3;
Figure 6 is a plan view of a disc spring;
Figures 7a-f illustrate diagrammatically operation of the selector mechanism; and
Figure 8a-c illustrate diagrammatically sequential operation of the transmission.

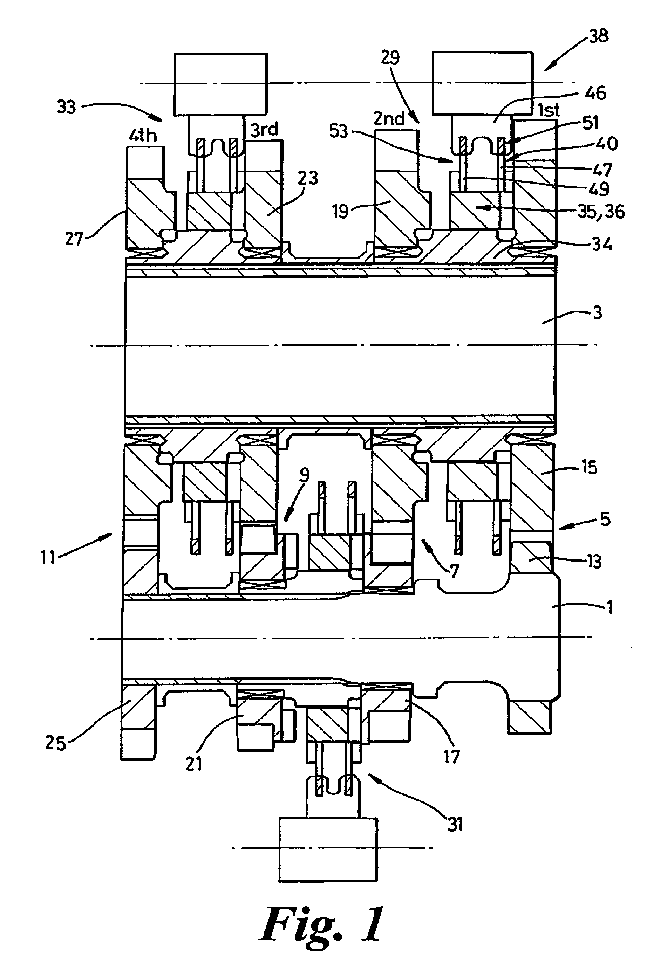

Figure 1 is a cross-section of a transmission in accordance with the invention that is arranged to prevent lockup from occurring. The transmission includes an input shaft 1, an output shaft 3 and first, second, third and fourth gear trains (or gear ratios) 5,7,9,11 arranged to transmit drive between the input and output shafts 1,3. The first gear train 5 comprises a first gear wheel 13 mounted on the input shaft 1 and a second gear wheel 15 mounted on the output shaft 3 in mesh with the first gear wheel 13. The second gear train 7 comprises a third gear wheel 17 mounted on the input shaft 1 and a fourth gear wheel 19 mounted on the output shaft 3 in mesh with the third gear wheel 17. The third gear train 9 comprises a fifth gear wheel 21 mounted on the input shaft 1 and a sixth gear wheel 23 mounted on the output shaft 3 in mesh with the fifth gear wheel 21.
The fourth gear train 11 comprises a seventh gear wheel 25 mounted on the input shaft 1 and an eighth gear wheel 27 mounted on the output shaft 3 in mesh with the seventh gear wheel 25.

The first and seventh gear wheels 13,25 are fixed to the input shaft 1 and are locked for rotation therewith. The other gear wheels 15-23,27 are mounted on their respective shafts on bearings so that they can rotate relative to the shafts 1,3 on which they are mounted. For every gear train (pair of gear wheels) in a conventional transmission, one of the gear wheels is permanently fixed to a shaft and the mating gear sits on a bearing, thus the mating gear can rotate independently of the shaft until it is fixed for rotation with the shaft, for example by means of a dog clutch arrangement, which is clearly different from the current invention. In the conventional transmission, all the fixed gears are on one shaft (e.g. input shaft) and all the bearing mounted gears are on the other shaft (e.g. output shaft).

The transmission also includes first, second and third gear selector mechanisms 29,31,33 that are arranged to selectively lock adjacent gear wheels for rotation with the shaft on which they are mounted. The first selector mechanism 29 is mounted on the output shaft 3 between the second and fourth gear wheels 15,19 and is arranged to selectively lock the second and fourth gear wheels 15,19 for rotation with the output shaft 3. The second selector mechanism 31 is mounted on the input shaft 1 between the third and fifth gear wheels 17,21 and is arranged to selectively lock the third and fifth gear wheels 17,21 for rotation with the input shaft 1. The third selector mechanism 33 is mounted on the output shaft 3 between the sixth and eighth gear wheels 23,27 and is arranged to selectively lock the sixth and eighth gear wheels 23,27 for rotation with the output shaft 3.

Thus the gear selector mechanisms 29,31,33 are arranged alternately on the input and output shafts 1,3 and are arranged to selectively engage at least one gear train (the second or third gear trains 7,11) that is selectively engageable by one other gear selector mechanism. This is achieved for a particular gear train in this embodiment by one of the gear selector mechanisms being arranged to engage one of the pair of gear wheels and the other gear selector mechanism being arranged to engage the other gear wheel. For example, for the third gear train 9 the second selector mechanism 31 is arranged to engage the fifth gear wheel 21 mounted on the input shaft 1 and the third gear selector mechanism 33 is arranged to engage the sixth gear wheel 23 on the output shaft 3.

When a gear wheel is engaged by a gear selector mechanism it is locked for rotation with the shaft on which it is mounted. So, for the third gear train 9, when the second gear selector mechanism 31 engages the fifth gear wheel 21 and the third gear selector mechanism 33 engages the sixth gear wheel 23 drive is transmitted between the input and output shafts 1,3 via the third gear train 9. If the second gear selector mechanism 31 disengages the fifth gear wheel 21 and/or the third gear selector mechanism 33 disengages the sixth gear wheel 23 then the disengaged gear wheel(s) will be free to rotate relative to the shaft on which it is mounted and drive will no longer be transmitted between the shafts 1,3.

Similarly, to transmit drive between the input and output shafts via the second gear train 7 both the first and second gear selector mechanisms 29,31 engage their respective gear wheels 17,19 in the second gear train 7.

Each selector mechanism 29,31,33 is similar and is mounted on its respective shaft 1,3 in a similar manner. The structure of the first gear selector mechanism 29 and the way in which it selectively engages the second and fourth gear wheels 15,19 will now be described however the general structure and principles of operation are applicable to the second and third gear selector mechanisms 31,33 and their respective gear wheels.

The gear selector mechanism 29 is arranged to engage drive formations 20 located on the second and fourth gear wheels 15,19. The drive formations 20 on each gear wheel 15,17 comprise groups of dogs. Similar drive formations are located on the third, fifth, sixth and eighth gear wheels 17,21,23,27.

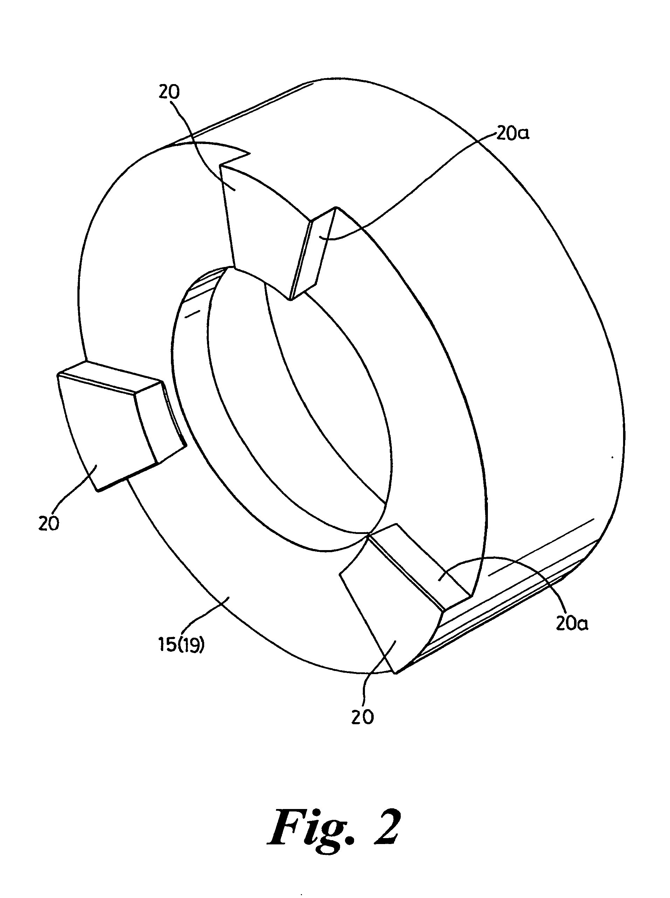

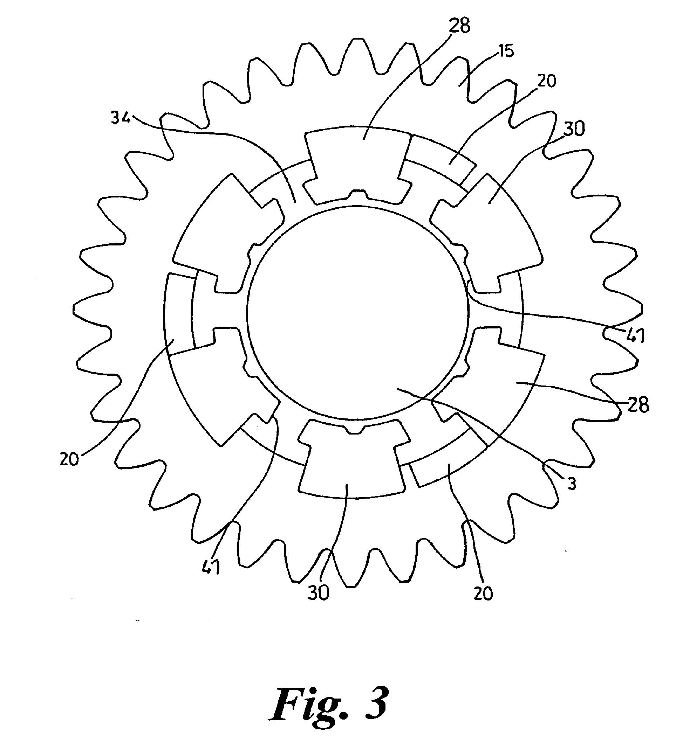

The first dog group 20 is located on one side of the second gear wheel 15. The dogs are preferably formed integrally with the second gear wheel, but this is not essential. The first dog group 20 comprises three dogs evenly circumferentially distributed about the gear face, i.e. the angle subtended between the centres of a pair of dogs is approximately 120° (see Figures 2 and 3). The second dog group 20, comprises three dogs and is similarly arranged on one side of the fourth gear wheel 19. Three dogs are used because this arrangement provides large engagement windows, that is the spaces between the dogs, to receive the engagement bars. Large engagement windows provide greater opportunities for the first gear selector mechanism 29 to fully engage the gear wheels 15,19 before transmitting drive thereto. If the first gear selector mechanism 29 drives a gear wheel when only partially engaged it can lead to damage of the dogs and / or the first gear selector mechanism 29.

The second and fourth gear wheels 15,17 are mounted spaced apart on the input shaft 1 on roller bearings 23,25 and are arranged such that the sides including the first and second dog groups face each other.

The first gear selector mechanism 29 includes first and second sets of engagement bars 35,36 and an actuator assembly 38 in the form of a fork assembly 40 and a selector rod (not shown).

The first and second sets of engagement bars 35,36 are mounted on the output shaft 3 between the second and fourth gear wheels 15,19. The first set of engagement bars 3 5 comprises three bars 28 that are evenly distributed about the output shaft 3 such that their bases face inwards, and the axes of the bars 28 are substantially parallel. The second set of engagement bars 36 comprises three bars 30 which are similarly arranged about the output shaft 1.

The sets of engagement bars 35,36 are mounted on a sleeve 34 which is mounted on the output shaft 3 between the first and second gear wheels 3,5 (see Figures 1 and 3). The sets of engagement bars 35,36 are arranged to rotate with the output shaft 3 but are able to slide axially along the sleeve 34 and the output shaft 3 in response to a switching action of the actuator assembly 38. To facilitate this, the sleeve 34 includes six keyways 41 formed in its curved surface with each engagement bar 28,30 having a complementary formation in its base. The keyways 41 have substantially T-shaped profiles such that the bars are radially and tangentially (but not axially) restrained within the keyways 41 (see Figure 2). Alternatively, the keyways 41 can have slotted or dovetailed profiles to radially restrain the bars.

Preferably the bars are configured to be close to the output shaft 1 to prevent significant cantilever effects due to large radial distances of loaded areas thus reducing the potential for structural failure.

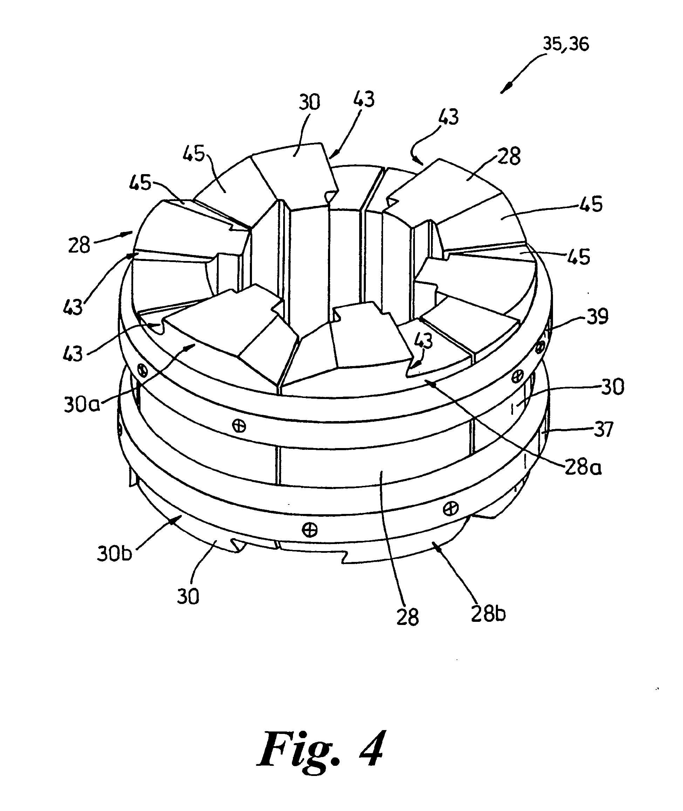

The arrangement of the bar sets 35,36 is such that bars of a particular set are located in alternate keyways 41 and the bar sets 35,36 can slide along the sleeve 37. Each bar set 35,36 moves as a unit and each bar set can move independently of the other. The bars in each bar set can be rigidly connected to each other, connected to each other by a spring element 49 (see below), or have no connection (see WO 2005/026570). An example of a rigid connection is shown in Figure 4. The bars 28 in the first set of engagement bars 35 may be attached to a first connector ring 37 using grub screws. The first connector ring 37 holds the bars in a fixed arrangement. The bars 28 are evenly distributed about the inner circumference of the first connector ring 37 such that their bases face inwards, and the bars 28 are arranged substantially parallel. The second set of engagement bars 36 comprises three bars 30, which are held in a similar fixed arrangement by a second connector ring 39. When there is relative movement between the first and second sets of bars 35,36, the second connector ring 39 slides over the first set of bars 35 and the first connector ring 37 slides over the second set of bars 36.

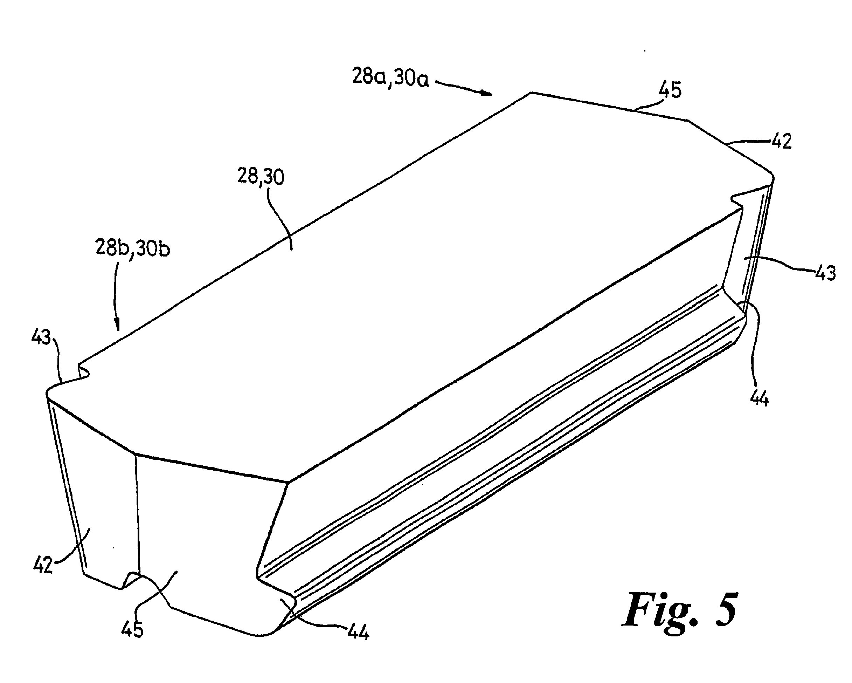

Each bar 28 in the first bar set 35 has a first end 28a arranged to engage the first group of dogs 20 attached to the second gear wheel 15 and a second end 28b arranged to engage the second group of dogs 20 on the fourth gear wheel 19 (see Figures 4 and 5). The first and second ends 28a,28b typically have the same configuration but are opposite handed, for example the first end 28a is arranged to engage the first group of dogs 20 during deceleration (reverse torque direction) of the second gear wheel 15 and the second end 28b is arranged to engage the second group of dogs 20 during acceleration (forward torque direction) of the fourth gear wheel 19, for example during engine braking in automotive applications. Each bar 30 in the second bar set 36 is similarly arranged, except that the first end 30a is arranged to engage the first group of dogs 20 during acceleration of the second gear wheel 15 and the second end 30b is arranged to engage the second group of dogs 20 during deceleration of the fourth gear wheel 19.

When both the first and second sets of engagement bars 35,36 engage a gear wheel drive is transmitted from the input shaft 1 to the output shaft 3 whether the gear is accelerating or decelerating.

The first and second ends 28a,30a,28b,30b of each bar include an engagement face 43 for engaging the dogs 20, a ramp 45, an end face 42 and may include a shoulder 44 (see Figure 4). The end faces 42 limit the axial movement of the engagement bars 28,30 by abutting the sides of the gear wheels. The engagement faces 43 may be angled to complement the sides of the dogs 20a so that as the engagement bars 28,30 rotate into engagement, there is face-to-face contact to reduce wear. Each ramp 45 is preferably helically formed and slopes away from the end face 42. The angle of inclination of the ramp 45 is such that the longitudinal distance between the edge of the ramp furthest from the end face 42 and the plane of the end face 42 is larger than the height of the dogs 19,21. This ensures that the transmission does not lock up when there is relative rotational movement between the engagement bars 28,30 and the dogs 20 that causes the ramp 45 to move towards engagement with the dogs 20. The dogs 20 do not crash into the sides of the engagement bars 28,30 but rather engage the ramps 45. As further relative rotational movement between the dogs 20 and the engagement bars 28,30 occurs, the dogs 20 slide across the ramps 45 and the helical surfaces of the ramps cause the engagement bars 28,30 to move axially along the output shaft 1 away from the dogs 20 so that the transmission does not lock up.

The arrangement of the gear selector mechanism is such that it inherently prevents lockup of the transmission occurring when selecting a new gear.

When the bars of the first and second sets 35,36 are interleaved, as in Figure 4, the engagement faces 43 of the first ends 28a of the first set of bars 35 are adjacent the engagement faces 43 of the first end 30a of the second set of bars 36. When the first and second sets of bars 35,36 are fully engaged with a gear, a dog 20 is located between each pair of adjacent engagement faces 43. The dimensions of the dogs 20 and the ends of the bars are preferably such that there is little movement of each dog between the engagement face 43 of the acceleration bar and the engagement face 43 of the deceleration bar when the gear moves from acceleration to deceleration, or vice versa, to ensure that there is little or no backlash in the gear.

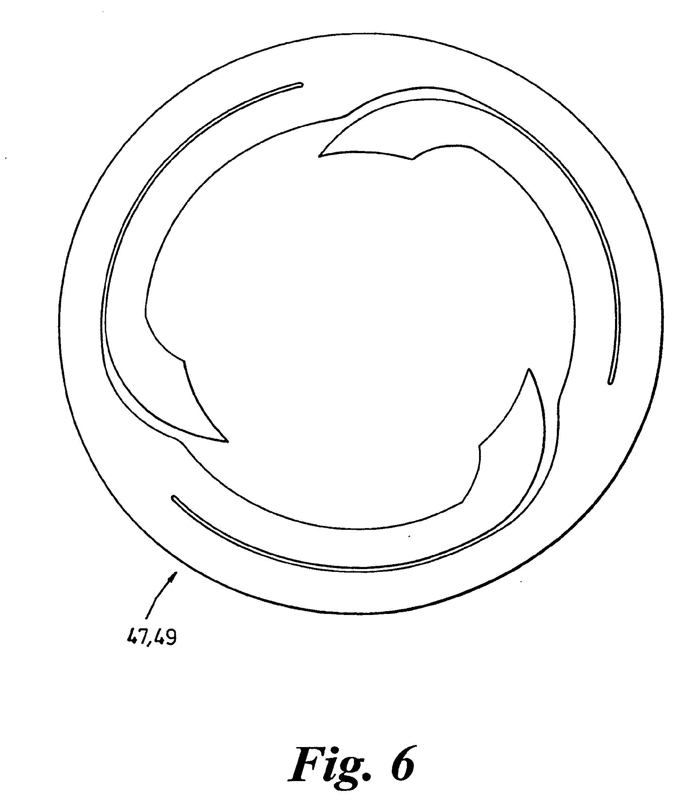

The actuator assembly 38 is arranged such that the fork assembly 40 is mounted on the selector rod, and the selector rod is provided parallel to the output shaft 3 and adjacent thereto. The fork assembly 40 includes a fork 46 and first and second annular disc springs 47,49 mounted about the output shaft 3 (see Figure 1). The first and second disc springs 47,49 have three arms, with each arm having a first part that extends circumferentially around a part of the spring and a second part that extends radially inwards (see Figure 6).

The fork 46 has a first pair of arcuate members 51 arranged to engage the first disc spring 47. The arcuate members 51 are arranged such that the first disc spring 47 can rotate with the input shaft 1 between the arcuate members 51 and such that axial movement of the fork 46 parallel to the output shaft 3 moves the arcuate members 51 and hence the first disc spring 47 axially along the shaft 3 if the first disc spring 47 is free to move, or biases the first disc spring 47 to move in the same direction as the fork 46 if the first disc spring 47 is unable to move. The fork 46 has a second pair of arcuate members 53 arranged to engage and act upon the second disc spring 49 in a similar manner.

The position of the fork 46 relative to the second and fourth gear wheels 15,19 can be adjusted by movement of the selector rod in the axial direction.

The inner edges of the first disc spring 47 are fixed to the bars 28 in the first bar set 35 and the inner edges of the second disc spring 49 are fixed to the bars 30 in the second bar set 36. When the fork 46 moves, thereby moving or loading the disc springs 47,49, the engagement bar sets 35,36 are likewise moved or biased to move.

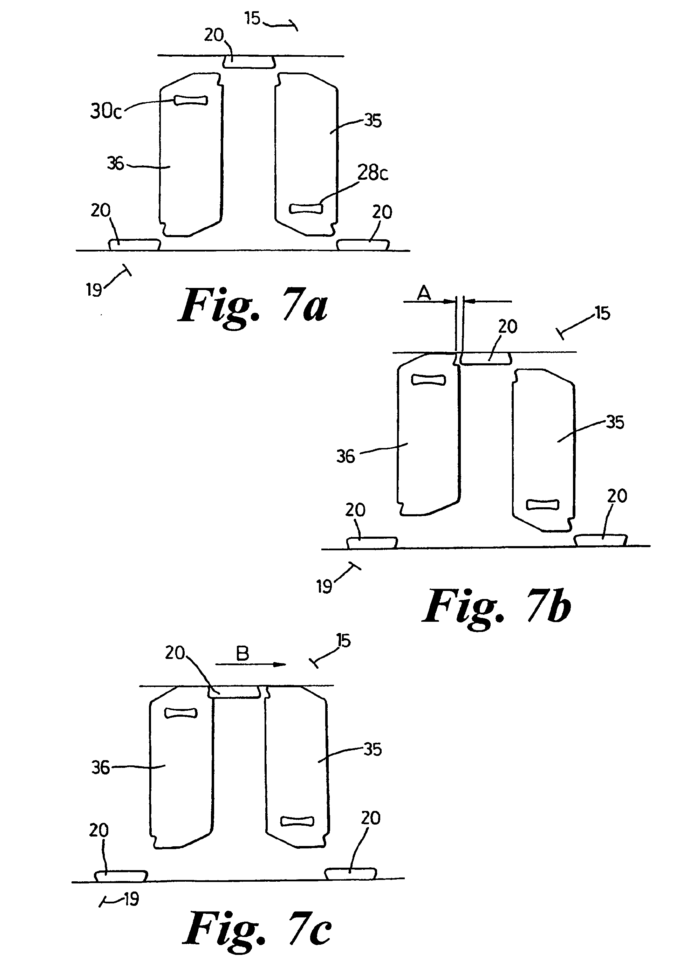

The operation of the gear selector mechanism 29 will now be described with reference to Figures 7a-7f which for clarity illustrate diagrammatically the movement of the first and second bar sets 35,36 by the relative positions of only one bar from each set.

Figure 7a shows the first and second bar sets 35,36 in a neutral position, that is, neither bar set is engaged with a gear wheel. Figure 7b shows the first and second bar sets moving into engagement with the second gear wheel 15 under the action of the fork 46.

Figure 7c shows a condition when the second gear wheel 15 is fully engaged, that is, the bars 28,30 are interleaved with the first group of dogs 20. The selector rod is located such that the fork 46 maintains the first and second bar sets 35,36 in engagement with the second gear wheel 15.

Accordingly, drive is transferred through the second gear wheel 15 to the output shaft 3 via the first bar set 35 when decelerating and via the second bar set 36 when accelerating.

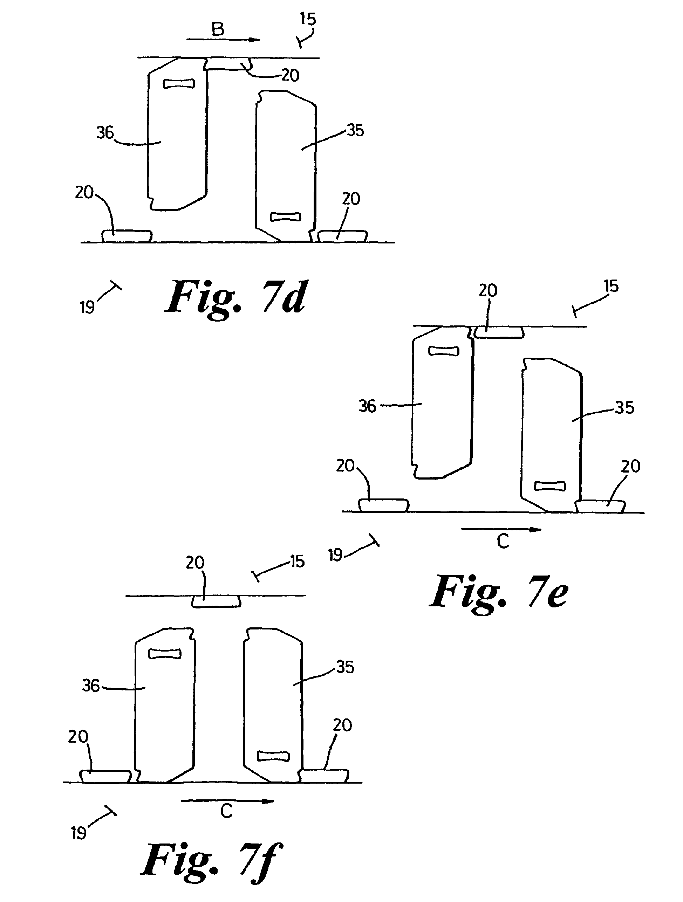

Whilst accelerating (second gear wheel 15 rotating in the direction of arrow B in Figure 5c) using the first gear wheel pair 5, the engagement faces 43 of the bars of the first bar set 35 are not loaded, whilst the engagement faces 43 of the bars of the second bar set 36 are loaded. When a user, or an engine management system (not shown) wishes to engage the second gear train 7, the selector rod is moved such that the fork 46 acts on the first disc spring 47, causing the bars 28 of the first bar set 35 to slide axially along the keyways 41 in the sleeve 34 thereby disengaging the bars 28 from the second gear wheel 15 (see Figure 7d).

The fork 46 also acts on the second disc spring 49 to bias the bars of the second bar set 36 to move towards the fourth gear wheel 19. However, because the bars 30 of the second bar set 36 are loaded, i.e. are driving the second gear wheel 15, they cannot be disengaged from the second gear wheel 15, and therefore the bars 30 of the second bar set 36 remain stationary.

When the bars 28 of the first bar set 35 slide axially along the output shaft 3, the engagement faces 43 engage the second group of dogs 20 (see Figure 7e). The bars 28 then begin to drive the fourth gear wheel 19 in the direction of Arrow C in Figure 7e and drive is transmitted from the input shaft 1 to the output shaft 3 via the second gear train 7. As this occurs, the bars 30 of the second bar set 36 cease to be loaded, and are free to disengage from the first group of dogs 20. Since the second disc spring 49 is biased by the fork 46, the bars 30 of the second bar set 36 slide axially along the keyways 41 in the sleeve 34 thereby completing the disengagement of the second gear wheel 15 from the output shaft 3. The bars 30 of the second bar set 36 slide along the keyways 41 until they engage the fourth gear wheel 19, thereby completing engagement of the fourth gear wheel 19 with the output shaft 3 (see Figure 7f).

This method of selecting gear trains substantially eliminates torque interruption since the second gear train 7 is engaged before the first gear train 5 is disengaged, thus momentarily, the first and second gear trains 5,7 are simultaneously engaged and locked for rotation with the output shaft 3, until the newly engaged gear wheel overdrives the original gear wheel.

When a gear wheel is engaged by both the first and second bar sets 35,36 it is possible to accelerate or decelerate using a gear wheel pair with very little backlash occurring when switching between the two conditions. Backlash is the lost motion experienced when the dog moves from the engagement face 43 of the acceleration bar to the engagement face 43 of the deceleration bar when moving from acceleration to deceleration, or vice versa. A conventional dog-type transmission system has approximately 30 degrees of backlash. A typical transmission system for a car in accordance with the current invention has backlash of less than four degrees.

Backlash is reduced by minimising the clearance required between an engagement member and a dog during a gear shift: that is, the clearance between the dog and the following engagement member (see measurement 'A' in Figure 7b). The clearance between the dog and the following engagement member is in the range 0.5mm - 0.03mm and is typically less than 0.2mm. Backlash is also a function of the retention angle, that is, the angle of the engagement face 43, which is the same as the angle of the undercut on the engagement face of the dog 20a. The retention angle influences whether there is relative movement between the dog and the engagement face 43. The smaller the retention angle, the less backlash that is experienced. The retention angle is typically between 2.5 and 15 degrees.

Transition from the second gear train 7 to the first gear train 5 whilst decelerating is achieved by a similar process.

Whilst decelerating in the second gear train 7 the engagement surfaces 43 of the bars of the first bar set 35 are not loaded, whilst the engagement surfaces 43 of the bars of the second bar set 36 are loaded. When a user, or an engine management system (not shown) wishes to engage the first gear train 5, the selector rod is moved such that the fork 46 slides axially relative to the output shaft 3. The fork 46 acts on the first disc spring 47 attached to the first bar set 35, causing the bars 28 of the first bar set 35 to slide axially in the keyways 41 along the output shaft 3 in the direction of the second gear wheel 15, thereby disengaging the first bar set 35 from the fourth gear wheel 19.

The fork 46 also acts on the second disc spring 49 but since the bars 30 of the second bar set 36 are loaded, i.e. they are drivingly engaged with the dogs 20 on the fourth gear wheel 19, the second bar set 36 remains stationary, however the second disc spring 49 is biased by the fork 46 to move the second bar set 36 towards the second gear wheel 15.

As the bars 28 of the first bar set 35 slide axially in the keyways 41, the bars 28 engage the dogs 20 on the second gear wheel 15 and begin to drive the second gear wheel 15 such that energy is transmitted from the input shaft 1 to the output shaft 3 by way of the first gear train 5. As this occurs, the bars 30 of the second bar set 36 cease to be loaded. The second disc spring 49 acts on the bars of the second bar set 36, causing them to slide axially within the keyways 41 along the output shaft 3 towards the second gear wheel 15, thereby completing disengagement of the fourth gear wheel 19. The second bar set 36 continues to slide within the keyways 41 along the output shaft 3 until it engages the second gear wheel 15, thereby completing engagement of the second gear wheel 15 with the output shaft 3.

Kick-down shifts, that is a gear shift from a higher gear train to a larger gear train but where acceleration takes place, for example when a vehicle is traveling up a hill and the driver selects a lower gear to accelerate up the hill, preferably have a brief torque interruption to allow disengagement prior to the shift.

Use of the instantaneous gear selector mechanism leads to improved performance, lower fuel consumption and lower emissions since drive interruption during gear changes is substantially eliminated. Also the system is a more compact design than conventional gearboxes leading to a reduction in gearbox weight.

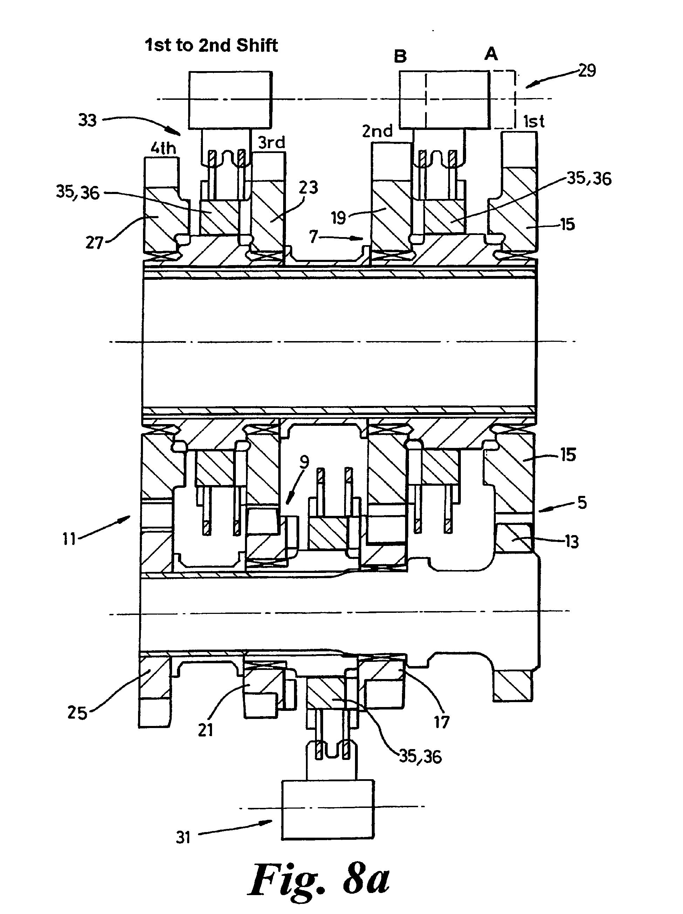

Figures 1 and 8a to 8c illustrate the operation of the transmission system such that transmission lockup cannot occur because each gear selection requires movement of only one gear selector mechanism. This is because each gear selector mechanism inherently prevents lockup occurring by its arrangement (see above).

Figure 1 shows the first gear selector mechanism fully engaged with the second gear wheel 15.
Drive is transferred between the input and output shafts 1,3 via the first gear train 5 since the first gear wheel 13 is fixed for rotation with the input shaft 1 and the second gear wheel 15 is locked for rotation with the output shaft 3 via the first gear selector mechanism 29. None of the other gear trains are transmitting drive since at least one of the gear wheels in each train is not locked for rotation with the shaft on which it is mounted, and therefore there is no possibility of lockup occurring.

Figure 8a shows the first gear selector mechanism 29 moving from a position A where it is fully engaged with the second gear wheel 15 to a position B where it is fully engaged with the fourth gear wheel 19 of the second gear train 7. The movement across the hub is as described above: that is, the unloaded set of engagement bars moves out of engagement with the second gear wheel 15 and into engagement with the fourth gear wheel 19 whilst the loaded set of engagement bars remains engaged with the second gear wheel 15. Thus the first gear selector mechanism 29 locks both the second and fourth gear wheels 15,19 for rotation with the output shaft 3 momentarily and drive is transmitted between the input and output shafts 1,3 by both the first and second gear trains 5,7 during that moment. However, the fourth gear wheel 19 quickly over drives the second gear wheel 15 allowing the other set of engagement bars to disengage the second gear wheel 15 and move into engagement with the fourth gear wheel 19 to complete the new gear selection. Therefore the gearshift takes place under power without interrupting the transfer of drive between the shafts 1,3.

When the second gear wheel 15 is released, drive is transferred between the input and output shafts 1,3 via the second gear train 7 only. Since the shift takes place across a single gear selector device (hub), there is no possibility of lockup occurring during the shift because of the inherent fail-safe configuration of the gear selector device.

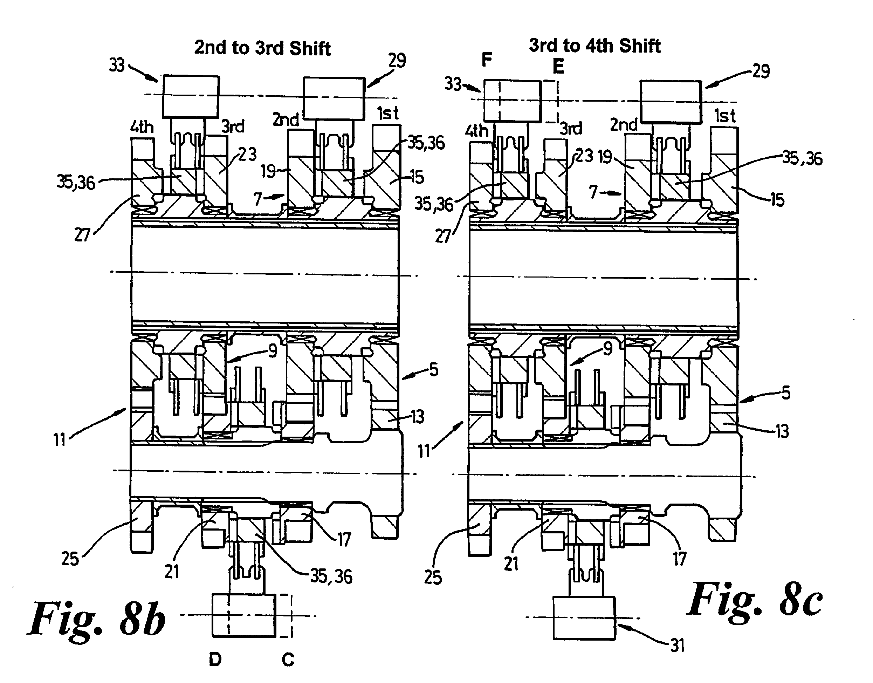

Figure 8b shows the second gear selector mechanism 31 moving from a position C where it is fully engaged with third gear wheel 17 of the second gear train 7 to a position D where it is fully engaged with fifth gear wheel 21 of the third gear train 9 in a similar manner to that described above. Drive is then transmitted between the shafts 1,3 via the third gear train 9. None of the other gear trains are transmitting drive since at least one of the gear wheels in each train is not locked for rotation with the shaft on which it is mounted. Again, there is no possibility of lockup occurring during the shift because it takes place across a single gear selector device. Figure 8c shows the third gear selector mechanism 33 moving from a position E where it is fully engaged with the sixth gear wheel 23 of the third gear train 9 to a position F where it is fully engaged with the eighth gear wheel 35 of the fourth gear train 11, and drive is transmitted between the shafts 1,3 via the fourth gear train 11. Similarly, lockup cannot occur as movement is across a single hub.

The gear selections can be performed in reverse without lockup occurring since each gear selection is across a single hub.

Thus the gear selector mechanisms 29,31,33 are arranged such that they can selectively engage at least one gear train that is selectively engageable by one other gear selector mechanism. In the embodiment described above, this is facilitated by arranging the gear selector mechanisms 29,31,33 alternately on the input and output shafts 1,3 between the gear trains 5,7,9,11. The layout of the transmission in conjunction with sequential gearshifts (gearshifts to the next higher or next lower gear, for example 1^{st} -2^{nd} -3^{rd} -4^{th} -3^{rd} -2^{nd} -1^{st} , or similar) removes the conditions where the transmission can lockup since each gearshift is across a single gear selector mechanism. The layout is facilitated by including at least one gear train that includes a first gear wheel rotatably mounted on the input shaft and a second gear wheel rotatably mounted on the output shaft, wherein one of the gear selector mechanisms is arranged to selectively lock the first gear wheel for rotation with the input shaft and another of the gear selector mechanisms is arranged to selectively lock the second gear wheel for rotation with the output shaft.

Practicable implementations of the invention will typically include at least three gear trains. The layout can be adapted for any larger number of gear trains by increasing the number of gear selector devices and positioning them alternately on the shafts in a similar fashion to the arrangement shown in Figure 1. Typically a transmission system will include one less gear selector mechanism than there are gear trains.

The transmission system can be used in any vehicle for example, road cars, racing cars, lorries, motorcycles, bicycles, trains, trams, coaches, earth removal vehicles such as bulldozers and diggers, cranes, water craft such as hovercraft and ships, aircraft including airplanes and helicopters, and military vehicles. The system can also be used in any machine that has first and second rotatable bodies wherein drive is to be transmitted from one of the rotatable bodies to the other with variable speed and torque characteristics, such as transportation systems and manufacturing equipment including lathes, milling machines and dedicated production systems.

It will be apparent to the skilled person that modifications may be made to the above embodiment that fall within the scope of the invention. For example, for some transmissions it may be desirable to move a gear selector mechanism into a neutral position before another gear selector device is operated to select a new gear train. The fixed gear wheels may be located on the output shaft if required, or may be substituted with rotatably mounted wheels and additional gear selector mechanisms. It will also be apparent to the skilled person that some of the general principles taught will be applicable to other types of instantaneous transmission systems and possibly to some non-instantaneous transmission systems.

## Claims

1. A transmission system including first and second shafts (3,1); first, second and third gear trains (5,7,9) for transmitting drive between the first and second shafts (3,1), wherein the first gear train (5) includes a first gear element (15) rotatably mounted on the first shaft (3) and a second gear element (13) fixed for rotation with the second shaft (1), the second gear train (7) includes a third gear element (19) rotatably mounted on the first shaft (3) and a fourth gear element (17) rotatably mounted on the second shaft (1), and the third gear train (9) includes a fifth gear element (23) rotatably mounted on the first shaft (3) and a sixth gear element (21) rotatably mounted on the second shaft (1); and first, second and third instantaneous gear selector devices (29,31,33), wherein the first instantaneous gear selector device (29) is arranged to selectively lock the first and third gear elements (15,19) for rotation with the first shaft (3), the second instantaneous gear selector device (31) is arranged to selectively lock the fourth and sixth gear elements (17,21) for rotation with the second shaft (1), and wherein the third instantaneous gear selector device (33) is arranged to selectively lock the fifth gear element (23) for rotation with the first shaft (3), and each instantaneous gear selector device (29,31,33) is arranged to selectively lock its respective gear element(s) (15,19,17,21,23) for rotation with its respective shaft (3,1) from operational modes that include the following modes: engage in both torque directions; engage in the forward torque direction while disengaged in the reverse torque direction; and engage in the reverse torque direction while disengaged in the forward torque direction.

2. A transmission system according to claim 1, wherein selection of each new gear train (5,7,9,11) is across a single instantaneous gear selector device (29, 31, 33).

3. A transmission system according to claim 1 or 2, wherein the instantaneous gear selector devices (29,31,33) are mounted alternately on the first and second shafts (1,3).

4. A transmission system according to any one of the preceding claims, wherein the gear trains (5,7,9,11) and the instantaneous gear selector devices (29,31,33) are arranged alternately.

5. A transmission system according to any one of the preceding claims, including between three and ten gear trains, preferably between three and eight gear trains, and more preferably between three and six gear trains.

6. A transmission system according to any one of the preceding claims, including n instantaneous gear selector mechanisms, where n = number of gear trains minus one.

7. A transmission system according to any one of the preceding claims, wherein the first gear train (5) is a highest or lowest gear ratio.

8. A transmission system according to any one of the preceding claims, wherein the first gear train (5) is positioned as an outermost gear train.

9. A transmission system according to any one of the preceding claims, including a fourth gear train (11) having seventh and eighth gear elements (27,25), wherein one of the gear elements is fixed for rotation with one of the first and second shafts (3,1) and the other gear element is rotatably mounted on the other shaft.

10. A transmission system according to claim 9, wherein if the transmission system includes an odd number of gear trains, the seventh gear element (27) is fixed for rotation with first shaft (3) and the eighth gear element (25) is rotatably mounted on the second shaft (1), and wherein if the transmission system includes an even number of gear trains, the seventh gear element (27) is rotatably mounted on the first shaft (3) and the eighth gear element (25) is fixed for rotation with the second shaft (1).

11. A transmission system according to claim 9 or 10, wherein the fourth gear train (11) is a highest or lowest gear ratio.

12. A transmission system according to any one of claims 9 to 11, wherein the fourth gear train (11) is positioned as an outermost gear train.

13. A transmission system according to any one of the preceding claims, wherein each of the instantaneous gear selector devices (29,31,33) is arranged to select neutral by disengaging in both forward and reverse torque directions.

## Patentansprüche

1. Getriebe, umfassend erste und zweite Wellen (3, 1), erste, zweite und dritte Getriebezüge (5, 7, 9), um den Antrieb zwischen der ersten und zweiten Welle (3, 1) zu übertragen, wobei der erste Getriebezug (5) ein erstes Getriebeelement (15) aufweist, das drehbar an der ersten Welle (3) angebracht ist, und ein zweites Getriebeelement (13), das zur Drehung mit der zweiten Welle (1) befestigt ist, der zweite Getriebezug (7) ein drittes Getriebeelement (19) aufweist, das drehbar an der ersten Welle (3) angebracht ist, und ein viertes Getriebeelement (17), das drehbar an der zweiten Welle (1) angebracht ist, und der dritte Getriebezug (9) ein fünftes Getriebeelement (23) aufweist, das drehbar an der ersten Welle (3) angebracht ist, und ein sechstes Getriebeelement (21), das drehbar an der zweiten Welle (1) angebracht ist; und erste, zweite und dritte unmittelbare Gangwählvorrichtungen (29, 31, 33), wobei die erste unmittelbare Gangwählvorrichtung (29) angeordnet ist, um das erste und dritte Getriebeelement (15, 19) auf selektive Weise zur Drehung mit der ersten Welle (3) zu verriegeln, die zweite unmittelbare Gangwählvorrichtung (31) angeordnet ist, um das vierte und sechste Getriebeelement (17, 21) auf selektive Weise zur Drehung mit der zweiten Welle (1) zu verriegeln, und wobei die dritte unmittelbare Gangwählvorrichtung (33) angeordnet ist, um das fünfte Getriebeelement (23) auf selektive Weise zur Drehung mit der ersten Welle (3) zu verriegeln, und jede unmittelbare Gangwählvorrichtung (29, 31, 33) angeordnet ist, um ihr(e) jeweiligen Getriebeelement(e) (15, 19, 17, 21, 23) aus den folgenden Betriebsmodi zur Drehung mit ihrer jeweiligen Welle zu verriegeln: Einkuppeln in beide Drehmomentrichtungen; Einkuppeln in die Vorwärtsdrehmomentrichtung beim ausgekuppelten Zustand in der Rückwärtsdrehmomentrichtung; und Einkuppeln in die Rückwärtsdrehmomentrichtung beim ausgekuppelten Zustand in der Vorwärtsdrehmomentrichtung.

2. Getriebe nach Anspruch 1, wobei die Wahl jedes neuen Getriebezugs (5, 7, 9, 11) über eine einzelne unmittelbare Gangwählvorrichtung (29, 31, 33) erfolgt.

3. Getriebe nach Anspruch 1 oder 2, wobei die unmittelbare Gangwählvorrichtungen (29, 31, 33) wechselweise auf der ersten und zweiten Welle (1, 3) angebracht sind.

4. Getriebe nach einem der vorherigen Ansprüche, wobei die Getriebezüge (5, 7, 9, 11) und die unmittelbaren Gangwählvorrichtungen (29, 31, 33) wechselweise angeordnet sind.

5. Getriebe nach einem der vorherigen Ansprüche, umfassend zwischen drei und zehn Getriebezüge, bevorzugt zwischen drei und acht Getriebezüge, und noch bevorzugter zwischen drei und sechs Getriebezüge.

6. Getriebe nach einem der vorherigen Ansprüche, umfassend n unmittelbare Gangwählmechanismen, wobei n die Anzahl der Getriebezüge minus eins ist.

7. Getriebe nach einem der vorherigen Ansprüche, wobei der erste Getriebezug (5) der mit dem höchsten oder niedrigsten Übersetzungsverhältnis ist.

8. Getriebe nach einem der vorherigen Ansprüche, wobei der erste Getriebezug (5) als äußerster Getriebezug angeordnet ist.

9. Getriebe nach einem der vorherigen Ansprüche, umfassend einen vierten Getriebezug (11) mit einem siebten und achten Getriebeelement (27, 25), wobei eines der Getriebeelemente zur Drehung mit einer von der ersten und zweiten Welle (3,1) angebracht ist und das andere Getriebeelement drehbar an der anderen Welle befestigt ist.

10. Getriebe nach Anspruch 9, wobei, wenn das Getriebe eine ungerade Zahl von Getriebezügen aufweist, das siebte Getriebeelement (27) zur Drehung mit der ersten Welle (3) befestigt ist und das achte Getriebeelement (25) drehbar an der zweiten Welle (1) angebracht ist, und wobei, wenn das Getriebe eine gerade Zahl von Getriebezügen aufweist, das siebte Getriebeelement (27) drehbar an der ersten Welle (3) angebracht ist und das achte Getriebeelement (25) zur Drehung mit der zweiten Welle (1) befestigt ist.

11. Getriebe nach Anspruch 9 oder 10, wobei der vierte Getriebezug (11) das mit dem höchsten oder niedrigsten Übersetzungsverhältnis ist.

12. Getriebe nach einem der Ansprüche 9 bis 11, wobei der vierte Getriebezug (11) als äußerster Getriebezug angeordnet ist.

13. Getriebe nach einem der vorherigen Ansprüche, wobei jede der unmittelbaren Gangwählvorrichtungen (29, 31, 33) angeordnet ist, um durch Auskuppeln sowohl in die Vorwärts- als auch in die Rückwärtsdrehmomentrichtung die Leerlaufstellung zu wählen.

## Revendications

1. Système de transmission comprenant des premier et deuxième arbres (3, 1) ; des premier, deuxième et troisième trains d'engrenages (5, 7, 9) pour transmettre un entraînement entre les premier et deuxième arbres (3, 1), dans lequel le premier train d'engrenages (5) comprend un premier élément d'engrenage (15) monté en rotation sur le premier arbre (3) et un deuxième élément d'engrenage (13) fixé pour une rotation avec le deuxième arbre (1), le deuxième train d'engrenages (7) comprend un troisième élément d'engrenage (19) monté en rotation sur le premier arbre (3) et un quatrième élément d'engrenage (17) monté en rotation sur le deuxième arbre (1), et le troisième train d'engrenages (9) comprend un cinquième élément d'engrenage (23) monté en rotation sur le premier arbre (3) et un sixième élément d'engrenage (21) monté en rotation sur le deuxième arbre (1) ; et des premier, deuxième et troisième dispositifs de sélection instantanée de vitesse (29, 31, 33), dans lequel le premier dispositif de sélection instantanée de vitesse (29) est agencé pour verrouiller de manière sélective les premier et troisième éléments d'engrenage (15, 19) pour une rotation avec le premier arbre (3), le deuxième dispositif de sélection instantanée de vitesse (31) est agencé pour verrouiller de manière sélective les quatrième et sixième éléments d'engrenage (17, 21) pour une rotation avec le deuxième arbre (1), et dans lequel le troisième dispositif de sélection instantanée de vitesse (33) est agencé pour verrouiller de manière sélective le cinquième élément d'engrenage (23) pour une rotation avec le premier arbre (3), et chaque dispositif de sélection instantanée de vitesse (29, 31, 33) est agencé pour verrouiller de manière sélective son élément d'engrenage ou ses éléments d'engrenage (15, 19, 17, 21, 23) respectifs pour une rotation avec son arbre (3, 1) respectif dans des modes de fonctionnement qui comprennent les modes suivants : en prise dans les deux directions de couple ; en prise dans la direction de couple avant tout en étant désengagé dans la direction de couple arrière ; et en prise dans la direction de couple arrière tout en étant désengagé dans la direction de couple avant.

2. Système de transmission selon la revendication 1, dans lequel la sélection de chaque nouveau train d'engrenages (5, 7, 9, 11) est effectuée par l'intermédiaire d'un dispositif de sélection instantanée de vitesse (29, 31, 33) unique.

3. Système de transmission selon la revendication 1 ou 2, dans lequel les dispositifs de sélection instantanée de vitesse (29, 31, 33) sont montés alternativement sur les premier et deuxième arbres (1, 3).

4. Système de transmission selon l'une quelconque des revendications précédentes, dans lequel les trains d'engrenages (5, 7, 9, 11) et les dispositifs de sélection instantanée de vitesse (29, 31, 33) sont agencés alternativement.

5. Système de transmission selon l'une quelconque des revendications précédentes, comprenant entre trois et dix trains d'engrenages, de préférence entre trois et huit trains d'engrenages, et plus préférablement entre trois et six trains d'engrenages.

6. Système de transmission selon l'une quelconque des revendications précédentes, comprenant n mécanismes de sélection instantanée de vitesse, où n est égal au nombre de trains d'engrenages moins un.

7. Système de transmission selon l'une quelconque des revendications précédentes, dans lequel le premier train d'engrenages (5) a un rapport de transmission le plus élevé ou le plus faible.

8. Système de transmission selon l'une quelconque des revendications précédentes, dans lequel le premier train d'engrenages (5) est positionné en tant que train d'engrenages le plus à l'extérieur.

9. Système de transmission selon l'une quelconque des revendications précédentes, comprenant un quatrième train d'engrenages (11) comportant des septième et huitième éléments d'engrenage (27, 25), dans lequel l'un des éléments d'engrenage est fixé pour une rotation avec l'un des premier et deuxième arbres (3, 1) et l'autre élément d'engrenage est monté en rotation sur l'autre arbre.

10. Système de transmission selon la revendication 9, dans lequel, si le système de transmission comprend un nombre impair de trains d'engrenages, le septième élément d'engrenage (27) est fixé pour une rotation avec le premier arbre (3) et le huitième élément d'engrenage (25) est monté en rotation sur le deuxième arbre (1), et dans lequel si le système de transmission comprend un nombre pair de trains d'engrenages, le septième élément d'engrenage (27) est monté en rotation sur le premier arbre (3) et le huitième élément d'engrenage (25) est fixé pour une rotation avec le deuxième arbre (1).

11. Système de transmission selon la revendication 9 ou 10, dans lequel le quatrième train d'engrenages (11) a un rapport de transmission le plus élevé ou le plus faible.

12. Système de transmission selon l'une quelconque des revendications 9 à 11, dans lequel le quatrième train d'engrenages (11) est positionné en tant que train d'engrenages le plus à l'extérieur.

13. Système de transmission selon l'une quelconque des revendications précédentes, dans lequel chacun des dispositifs de sélection instantanée de vitesse (29, 31, 33) est agencé pour sélectionner la position neutre par un désengagement dans les deux directions de couple avant et arrière.
